# EUROPÄISCHE PATENTSCHRIFT

(11) **EP 2 057 330 B1**
(45) Veröffentlichungstag und Bekanntmachung des Hinweises auf die Patenterteilung: **09.12.2009**
(21) Anmeldenummer: 07801972.6
(22) Anmeldetag: 29.08.2007
(51) Int. Cl.: E21D 7/00, A01K 63/00

(54) **TIEFSEEAQUARIUM UND ZUGEHÖRIGES BETRIEBSVERFAHREN**
DEEP SEA AQUARIUM AND CORRESPONDING OPERATION METHOD
AQUARIUM REPRODUISANT LES CONDITIONS DES GRANDS FONDS MARINS, ET PROCÉDÉ DE FONCTIONNEMENT CORRESPONDANT

(30) Priorität: 01.09.2006 DE 102006041063; 15.06.2007 DE 102007027643
(43) Veröffentlichungstag der Anmeldung: 13.05.2009
(73) Patentinhaber: Fraunhofer-Gesellschaft zur Förderung der Angewandten Forschung e.V., 80686 München (DE)
(72) Erfinder: FUHR, Günter, 13187 Berlin (DE); ZIMMERMANN, Heiko, 66386 St. Ingbert (DE)
(74) Vertreter: Beier, Ralph
(86) Internationale Anmeldenummer: PCT/EP2007/007551
(87) Internationale Veröffentlichungsnummer: WO 2008/025537

(56) Entgegenhaltungen:
- GB-A- 2 338 185
- JP-A- 2 274 980
- US-A- 4 837 989
- US-A- 5 353 745

## Beschreibung

Die Erfindung betrifft ein Aquarium und ein entsprechendes Betriebsverfahren gemäß den nebengeordneten Ansprüchen.

Zur Beherbergung und Untersuchung von Fischen und sonstigen Meerestieren werden Aquarien eingesetzt, die im Wesentlichen aus einem Wasserbehälter bestehen, der im Betrieb mit Wasser gefüllt ist und die zu beherbergenden Fische bzw. Meerestiere aufnimmt.

Nachteilig an den bekannten Aquarien ist die mangelhafte Eignung zur Beherbergung von Tiefseeorganismen, die in ihrem natürlichen Lebensraum in der Tiefsee an einen hohen Wasserdruck entsprechend einer Wassersäule von mehr als 1000 Metern gewöhnt sind und deshalb in einem Aquarium aufgrund des dort herrschenden geringen Wasserdrucks nicht existieren können.

Weiterhin sind sogenannte Tiefseeaquarien bekannt, die beispielsweise in öffentlichen Zoos zur Ausstellung von Fischen und sonstigen Meerestieren eingesetzt werden. Die Bezeichnung dieser bekannten Aquarien als Tiefseeaquarien ist jedoch irreführend, da der Wasserdruck in diesen Aquarien keinesfalls dem Tiefseedruck entspricht, so dass sich diese Aquarien ebenfalls nicht zur Beherbergung von Tiefseeorganismen eignen.

Die Untersuchung von Tiefseeorganismen erfolgt deshalb bisher mittels Unterseeboten in der Tiefsee, was jedoch mit verschiedenen Nachteilen verbunden ist. Zum einen ist der Einsatz von Unterseeboten zur Untersuchung von Tiefseeorganismen äußerst aufwändig. Zum anderen ist die Einsatzdauer von Unterseebooten zeitlich begrenzt, so dass auch nur entsprechend kurzzeitige Untersuchungen an den Tiefseeorganismen vorgenommen werden können.

GB-A-2 338 185 offenbart ein Aquarium mit einem Wasserbehälter, der im Betrieb mit Wasser gefüllt ist und Untersuchungsobjekte enthält, wobei sich der Wasserbehälter mindestens teilweise unterirdisch im Erdreich befindet und sich so tief in das Erdreich erstreckt, dass zumindest am Boden des Wasserbehälters Tiefseedruck herrscht, sofern man unter dem Begriff eines Tiefseedrucks auch eine Wassersäule von beispielsweise 15m versteht. Aus dieser Entgegenhaltung ist jedoch nicht bekannt, dass der Wasserbehälter des Aquariums in einem Bergwerksschacht, einem Bergwerksstollen, einer Bergwerkskaverne oder einem Brunnenschacht angeordnet ist.

Das gleiche gilt für US-A-4 837 989, da aus diesem Patent ebenfalls nicht bekannt ist, den Wasserbehälter des Aquariums in einem Bergwerksschacht, einem Bergwerksstollen, einer Bergwerkskaverne oder einem Brunnenschacht anzuordnen. Zum Stand der Technik ist ferner hinzuweisen auf JP 02 274980 A und US-A-5 353 745.

Der Erfindung liegt deshalb die Aufgabe zugrunde, eine einfache Möglichkeit zur Untersuchung von Tiefseeorganismen zu schaffen.

Diese Aufgabe wird durch ein erfindungsgemäßes Aquarium und ein entsprechendes Betriebsverfahren gemäß den Nebenansprüchen gelöst.

Die Erfindung umfasst die allgemeine technische Lehre, dass sich der Wasserbehälter bei dem erfindungsgemäßen Aquarium so tief in das Erdreich erstreckt, dass zumindest am Boden des Wasserbehälters Tiefseedruck herrscht, was eine Untersuchung von Tiefseeorganismen ermöglicht.

Der im Rahmen der Erfindung verwendete Begriff eines Tiefseedrucks stellt vorzugsweise auf eine Wassersäule von mehr als 1000m oder sogar mehr als 2000m ab. Die Erfindung ist jedoch hinsichtlich des Tiefseedrucks nicht auf Wassersäulen von mehr als 1000m beschränkt, sondern umfasst beispielsweise auch Wasserbehälter, die lediglich eine Wassersäule von mehr als 500m, 250m, 100m, 50m oder sogar nur mehr als 20m enthalten. Bei dem erfindungsgemäßen Aquarium herrscht dementsprechend am Boden des Wasserbehälters ein Druck von mehr als 2bar, 5bar, 10bar, 25bar, 50bar, 100bar oder sogar mehr als 100bar.

Eine einfache Möglichkeit zur Realisierung des erfindungsgemäßen Aquariums besteht darin, dass der Wasserbehälter in einem Bergwerksschacht, einem Bergwerksstollen oder einer Bergwerkskaverne eines Untertage-Bergwerks angeordnet wird. Alternativ eignet sich jedoch auch ein Brunnenschacht zur Aufnahme des Wasserbehälters für das erfindungsgemäße Aquarium.

Der Wasserbehälter kann hierbei wahlweise durch einen unterirdischen Hohlraum (z.B. Bergwerksschacht) gebildet werden oder als separates Bauteil in dem Hohlraum angeordnet sein.

Weiterhin kann es sich bei dem Hohlraum zur Aufnahme des Wasserbehälters für das erfindungsgemäße Aquarium wahlweise um einen natürlichen geologischen Hohlraum (z.B. Höhle) oder um einen künstlich erzeugten Hohlraum (z.B. Bergwerksschacht) im Erdreich handeln.

Ferner kann der Wasserbehälter bei dem erfindungsgemäßen Aquarium in Abhängigkeit zu den zu untersuchenden Organismen wahlweise mit Salzwasser oder mit Süßwasser gefüllt sein.

Das vorstehend beschriebene erfindungsgemäße Aquarium ist in dieser Form bereits weitgehend in der parallelen deutschen Patentanmeldung DE 10 2006 041 063 beschrieben.

Die vorliegende Erfindung löst darüber hinaus ein weiteres Problem. Einerseits kann nämlich ein Teil der von dem Aquarium beherbergten Meeresorganismen nur in einer bestimmten Meerestiefe leben, da sich diese Meeresorganismen an den dort herrschenden Druck angepasst haben. Andererseits verfügt ein Teil dieser Meeresorganismen über die Fähigkeit zur aktiven Bewegung und würde sich deshalb in dem Aquarium über verschiedene Tiefenbereiche bewegen. Ein anderer Teil der Meeresorganismen würde dagegen wegen mangelnder eigener Mobilität bis auf den Grund des Aquariums sinken, der nicht dem natürlichen und geeigneten Lebensraum dieser Meeresorganismen entspricht. Die Bewegung der Meeresorganismen in dem Aquarium kann also zu einer Beeinträchtigung dieser Meeresorganismen führen.

Der Erfindung liegt deshalb auch die Aufgabe zugrunde, die Probleme zu lösen, die mit der Bewegung der Meeresorganismen in dem Aquarium verbunden sind.

Diese Aufgabe wird erfindungsgemäß durch eine Kontrolleinrichtung gelöst, welche die Bewegungen von Objekten (z.B. Meeresorganismen) und/oder des Wassers in dem Wasserbehälter kontrolliert. Im Rahmen dieser Bewegungskontrolle kann die Kontrolleinrichtung Bewegungen der Objekte und/oder des Wassers in dem Wasserbehälter verhindern (d.h. blockieren), erfassen und/oder gezielt steuern.

Zur Verhinderung von Bewegungen in dem Wasserbehälter kann die Kontrolleinrichtung beispielsweise eine Barriere aufweisen, die in dem Wasserbehälter angeordnet ist und eine Bewegung von Objekten (z.B. Meeresorganismen, Wasser, Versorgungskapseln) in dem Wasserbehälter mindestens teilweise aufhält.

In einer Variante der Erfindung ist diese Barriere größenselektiv, indem die Barriere kleine Objekte (z.B. kleine Meerestiere) durchlässt und große Objekte (z.B. große Fische) aufhält.

Beispielsweise lässt sich diese Größenselektivität der Barriere dadurch erreichen, dass die Barriere aus einem Gitter mit einer bestimmten Maschenweite besteht, wobei die Maschenweite des Gitters die Größenselektivität der Barriere bestimmt. Das Gitter hält dann nur solche Objekte (z.B. Fische) zurück, die größer als die Maschenweite des Gitters sind. Kleinere Objekte (z.B. Nährstoffe) können das Gitter dagegen weitgehend ungehindert passieren.

In einem Ausführungsbeispiel der Erfindung mit einem Gitter als Barriere ist vorgesehen, dass sich die Maschenweite des Gitters einstellen lässt, um die Größenselektivität zu beeinflussen. Beispielsweise können hierzu mehrere planparallel angeordnete Gitter vorgesehen sein, die relativ zueinander beweglich sind, um die effektive Maschenweite zu verändern. Die effektive Maschenweite dieser Gitteranordnung ist dann maximal, wenn die Gitter relativ zueinander so angeordnet sind, dass die Maschen der beiden Gitter jeweils deckungsgleich übereinander liegen. Die effektive Maschenweite dieser Gitteranordnung ist dagegen minimal, wenn die beiden Gitter relativ zueinander so verschoben werden, dass die Gitterknoten des einen Gitters in der Maschenmitte des anderen Gitters liegen. Durch eine Relativverschiebung der beiden Gitter lässt sich also die effektive Maschenweite und damit die Größenselektivität der Barriere einstellen.

In einem Ausführungsbeispiel der Erfindung weist die Barriere in dem Wasserbehälter eine Durchtrittsöffnung auf, um die Barriere passieren zu können, beispielsweise für Probenentnahmen. Hierbei ist im Bereich der Durchtrittsöffnung vorzugsweise eine Abschreckeinrichtung angeordnet, um biologische Organismen (z.B. dunkeladaptierte Tiefseeorganismen) vor einem Passieren der Durchtrittsöffnung abzuschrecken. Hierzu kann die Abschreckeinrichtung beispielsweise intensives Licht, elektrische Impulse, elektrische Wechselfelder und/oder elektromagnetische Strahlung abgeben.

In einem weiteren Ausführungsbeispiel der Erfindung weist die Barriere in dem Wasserbehälter eine bestimmte Widerstandskraft auf, so dass die Barriere Objekte mit einer kleinen Durchstoßkraft (z.B. kleine Tiefseefische) aufhält, wohingegen die Barriere Objekte mit einer großen Durchstoßkraft (z.B. relativ schwere Versorgungskapseln) durchlässt.

Weiterhin ist im Rahmen der Erfindung vorzugsweise vorgesehen, dass die Barriere zwischen einer Blockierstellung und einer Passierstellung verstellbar ist, wobei die Barriere in der Blockierstellung die Bewegung der Objekte blockiert, wohingegen die Barriere in der Passierstellung die Objekte passieren lässt. Beispielsweise kann die Barriere zwischen der Blockierstellung und der Passierstellung geklappt, gedreht, geschwenkt oder verschoben werden.

Weiterhin kann die Barriere den Querschnitt des Wasserbehälters entweder teilweise oder vollständig erfassen.

Beispielsweise können in dem Wasserbehälter in verschiedenen Wassertiefen mehrere Barrieren eingezogen sein, die über den gesamten Querschnitt des Wasserbehälters reichen und den Wasserbehälter dadurch in mehrere Tiefenzonen einteilen.

Es ist jedoch alternativ möglich, dass die übereinander angeordneten Barrieren in dem Wasserbehälter jeweils nur einen Teilquerschnitt des Wasserbehälters abdecken, wobei die Barrieren in Umfangsrichtung versetzt angeordnet sein können. Dies bietet den Vorteil, dass Nährstoffe von oben bis auf den Grund des Wasserbehälters absinken können, um dort angesiedelte Meeresorganismen zu versorgen.

Ferner besteht im Rahmen der Erfindung die Möglichkeit, dass die Barriere in dem Wasserbehälter semipermeabel ist, indem die Barriere für das Wasser und für gelöste oder suspendierte Inhaltsstoffe (z.B. Nährstoffe) in dem Wasser durchlässig ist, wohingegen die Barriere für die Untersuchungsobjekte (z.B. Meeresorganismen) oder andere Objekte undurchlässig ist.

Darüber hinaus besteht die Möglichkeit, dass die Barriere in dem Wasserbehälter eine veränderbare Position aufweist, was eine flexible Raumaufteilung in dem Wasserbehälter ermöglicht. Beispielsweise kann die Barriere in dem Wasserbehälter gezielt zur Absperrung von Seitenstollen eines Bergwerks eingesetzt werden.

Darüber hinaus ist es vorteilhaft, wenn die Barriere ein Sichtfenster aufweist oder aus einem durchsichtigen Material besteht, um eine Sichtkontrolle durch die Barriere hindurch zu ermöglichen.

In einer Variante der Erfindung wird die Barriere durch Absätze in der inneren Seitenwand des Wasserbehälters gebildet, wobei die einzelnen Absätze jeweils Plattformen zur Besiedelung mit Meeresorganismen bilden. Die Plattformen verhindern hierbei vorteilhaft, dass die anzusiedelnden Meeresorganismen nach unten in die Tiefe absinken.

Alternativ besteht die Möglichkeit, dass die Barriere durch eine Plattform gebildet wird, die in dem Wasser schwebt.

Der im Rahmen der Erfindung verwendete Begriff einer Bewegungskontrolle ist jedoch nicht auf die vorstehend erläuterte Verhinderung von Bewegungen in dem Wasserbehälter beschränkt. Vielmehr umfasst dieser Begriff auch die Erfassung von Bewegungen, wozu beispielsweise ein Bewegungssensor eingesetzt werden kann.

Ferner ist zu erwähnen, dass die Bewegungen vorzugsweise in senkrechter Richtung und/oder in waagerechter Richtung kontrolliert werden.

Aus den vorstehenden Ausführungen ergibt sich bereits, dass die Erfindung nicht nur auf ein Aquarium beschränkt ist, sondern auch ein entsprechendes Betriebsverfahren umfasst.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Querschnittsansicht durch einen Bergwerks- schacht, der entsprechend der Erfindung als Tief- seeaquarium umfunktioniert wurde,
- Figur 2: eine Längsschnittansicht entlang der Schnittlinie A-A in Figur 1,
- Figur 3: eine Abwandlung des als Tiefseeaquarium umfunktio- nierten Bergwerksschachts aus den Figuren 1 und 2,
- Figur 4: eine weitere Abwandlung des als Tiefseeaquarium um- funktionierten Bergwerksschachts, der durch ver- schließbare Barrieren in mehrere Tiefenzonen unter- teilt ist,
- Figur 5: eine weitere Abwandlung des als Tiefseeaquarium um- funktionierten Bergwerksschachts, wobei der Berg- werksschacht seitlich Absätze aufweist, die Platt- formen zur Besiedlung mit Meeresorganismen bilden,
- Figur 6: eine Abwandlung des Ausführungsbeispiels aus Fi- gur 4, wobei die Barrieren zwischen den verschiede- nen Tiefenzonen wasserdurchlässig sind,
- Figur 7: eine Abwandlung des Ausführungsbeispiels aus Fi- gur 4 mit Durchtrittsöffnungen in den Barrieren zwischen den benachbarten Tiefenzonen, wobei die Durchtrittsöffnungen ausgeleuchtet sind, um dunkel- adaptierte Tiefseeorganismen am Passieren zu hin- dern sowie
- Figur 8: eine Abwandlung des Ausführungsbeispiels aus Fi- gur 4, wobei die Barrieren zwischen den benachbar- ten Tiefenzonen für Versorgungskapseln durchlässig sind, die von oben nach unten durch verschiedene Tiefenzonen sinken können.

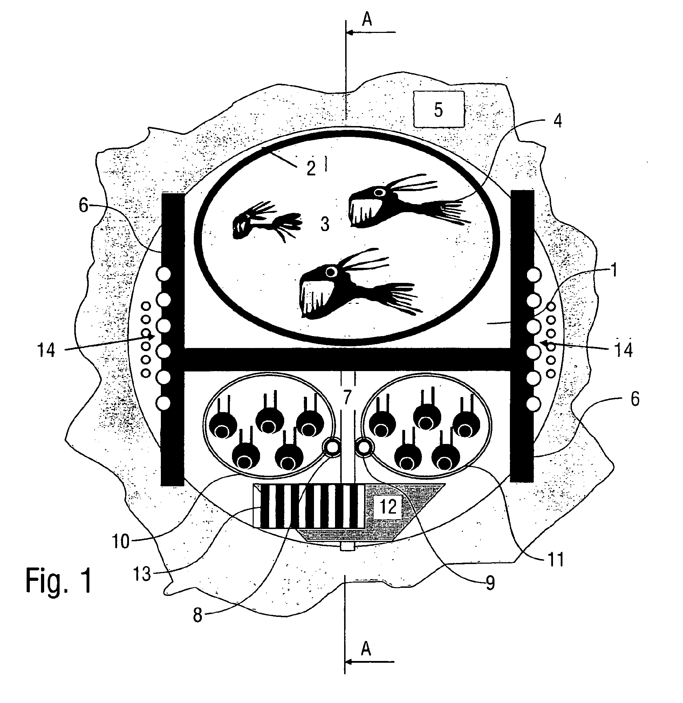

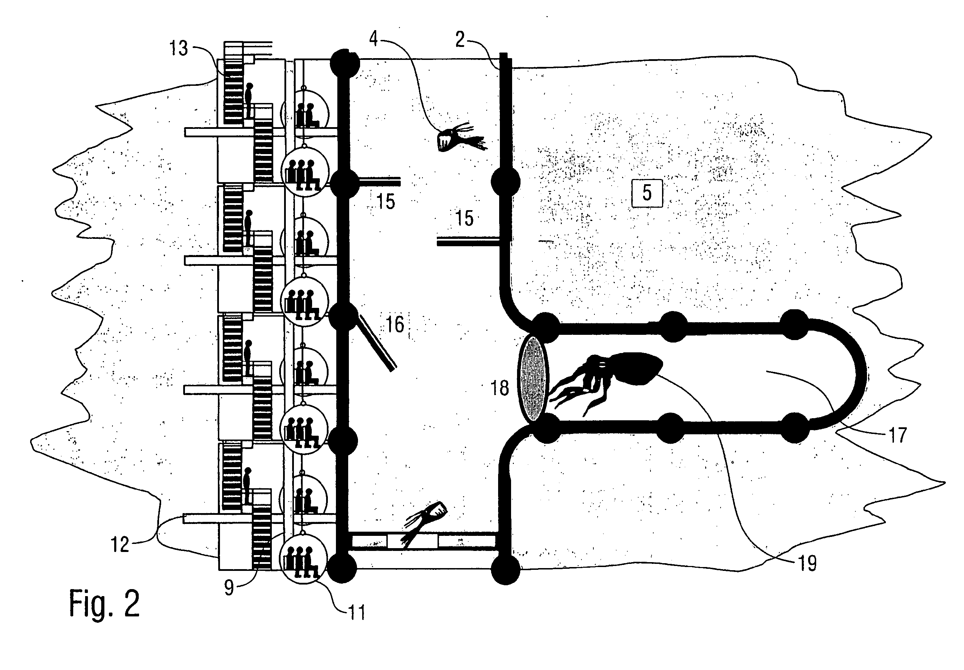

Die Figuren 1 und 2 zeigen einen als Tiefseeaquarium umfunktionierten Bergwerksschacht 1 mit einer Tiefe von mehreren tausend Metern, wobei der Bergwerksschacht 1 zu einem stillgelegten Untertage-Bergwerk gehört, in dem kein Bergbau mehr betrieben wird. Beispielsweise kann es sich hierbei um ein stillgelegtes Steinkohle- oder Salzbergwerk handeln.

In dem Bergwerksschacht 1 ist ein Wasserbehälter 2 mit einem elliptischen Querschnitt angeordnet, wobei sich der Wasserbehälter 2 von der Erdoberfläche nach unten bis zum Boden des Bergwerksschachts 1 erstreckt und in diesem Ausführungsbeispiel mit Meerwasser 3 gefüllt ist, um Meerestiere 4 aufzunehmen, die hier nur schematisch dargestellt sind. Die Wandstärke des Wasserbehälters 2 ist hierbei entsprechend der jeweiligen Wassertiefe an die Druckverhältnisse angepasst. Die Wandstärke des Wasserbehälters 2 nimmt deshalb von oben nach unten zu, um auch am Boden des Wasserbehälters 2 dem dort herrschenden größeren Wasserdruck standhalten zu können.

Der restliche Querschnitt des Bergwerksschachts 1 ist neben dem Wasserbehälter 2 mit Luft unter atmosphärischem Druck gefüllt, wobei die Innenwand des Bergwerksschachts 1 gegenüber dem umgebenden Erdreich 5 abgemauert ist.

Weiterhin sind in dem Bergwerksschacht 1 übereinander im Abstand von einigen Metern bis zu einigen zehn Metern abstützende, H-förmige Stahlträger 6 eingezogen. Der Wasserbehälter 2 ist an den Stahlträgern 6 verankert und wird durch diese in dem Bergwerksschacht 1 mechanisch stabilisiert.

Auf der dem Wasserbehälter 2 gegenüberliegenden Seite der Stahlträger 6 befindet sich ein weiterer Stahlträger 7 mit zwei senkrecht verlaufenden Führungsschienen 8, 9, an denen jeweils eine Aufzugsgondel 10, 11 zur Personenbeförderung an Seilen abgelassen bzw. hinaufgezogen werden kann.

Darüber hinaus befinden sich in dem Bergwerksschacht 1 in regelmäßigen Abständen übereinander Rettungsplattformen 12, die über Notausstiege in den Aufzugsgondeln 10, 11 erreicht werden können und durch Treppen 13 miteinander verbunden sind. Bei einem Funktionsausfall der Aufzugsgondeln 10, 11 können die in den Aufzugsgondeln 10, 11 befindlichen Personen also die Aufzugsgondeln über den jeweiligen Notausstieg verlassen und die nächstgelegene Rettungsplattform 12 erreichen. Von dort können die Personen den Bergwerksschacht 1 dann über die Treppen 13 verlassen.

Weiterhin befinden sich in dem Bergwerksschacht 1 seitlich neben dem Stahlträger 6 Medienleitungen 14 für Strom, Zuluft, Abluft etc., wobei sich die Medienleitungen 14 in dem Bergwerksschacht 1 von der Erdoberfläche bis zum Boden des Bergwerksschachts 1 erstrecken.

Aus der Längsschnittansicht in Figur 2 ist weiterhin ersichtlich, dass in dem Wasserbehälter 2 in verschiedenen Tiefen feste Barrieren 15 und klappbare Barrieren 16 angeordnet sind. Die festen Barrieren 15 und im horizontalen Zustand auch die klappbaren Barrieren 16 reichen hierbei jeweils über einen Teil des Querschnitts des Wasserbehälters 2 und verhindern, dass die größeren Meerestiere 4 in dem Wasserbehälter 2 nach unten sinken.

Die Barrieren 15, 16 sind in diesem Ausführungsbeispiel als Gitter ausgebildet und weisen eine bestimmte Maschenweite auf, so dass das Wasser und kleinere Meeresorganismen, wie beispielsweise Plankton, die Barrieren 15, 16 nahezu ungehindert passieren können, wohingegen die wesentlich größeren Meerestiere 4 aufgehalten werden.

Weiterhin zeigt die Längsschnittsansicht in Figur 2 einen Seitenstollen 17 des stillgelegten Bergwerks, wobei der Seitenstollen 17 von dem Bergwerksschacht 1 seitlich abzweigt. Die Mündungsstelle des Seitenstollens 17 in dem Bergwerksschacht 1 ist hierbei durch eine Barriere 18 verschlossen, so dass in dem Seitenstollen 17 größere Meerestiere 19 eingeschlossen werden können.

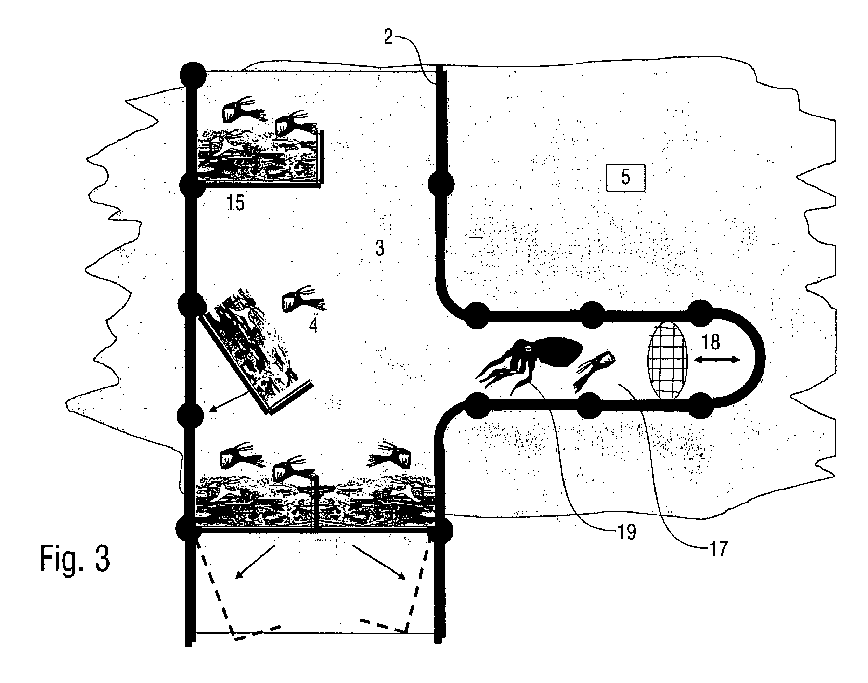

Das Ausführungsbeispiel gemäß Figur 3 stimmt weitgehend mit dem vorstehend beschriebenen und in den Figuren 1 und 2 dargestellten Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die klappbaren Barrieren 16 ganze Biotope mit Meeresbodenformationen und Organismengemeinschaften tragen, wobei die einzelnen klappbaren Barrieren 16 asymmetrisch und sektorweise in den Wasserbehälter 2 hineinragen.

Die Barrieren 16 sind hierbei wannenförmig ausgebildet, um die Meeresbodenformationen bzw. Organismengemeinschaften aufnehmen zu können.

Wichtig ist hierbei, dass der Wasserbehälter 2 von den klappbaren Barrieren 16 nicht in übereinander angeordnete Tiefenzonen abgetrennt wird, zwischen denen kein Wasseraustausch möglich ist. Vielmehr können Nährstoffe von oben bis auf den Boden des Wasserbehälters 2 gelangen.

Weiterhin ist die gitterförmige Barriere 18 in diesem Ausführungsbeispiel weiter hinten in dem Seitenstollen 17 angeordnet, so dass die größeren Meerestiere 19 aus dem Seitenstollen 17 nach vorne in den Wasserbehälter 2 gelangen können.

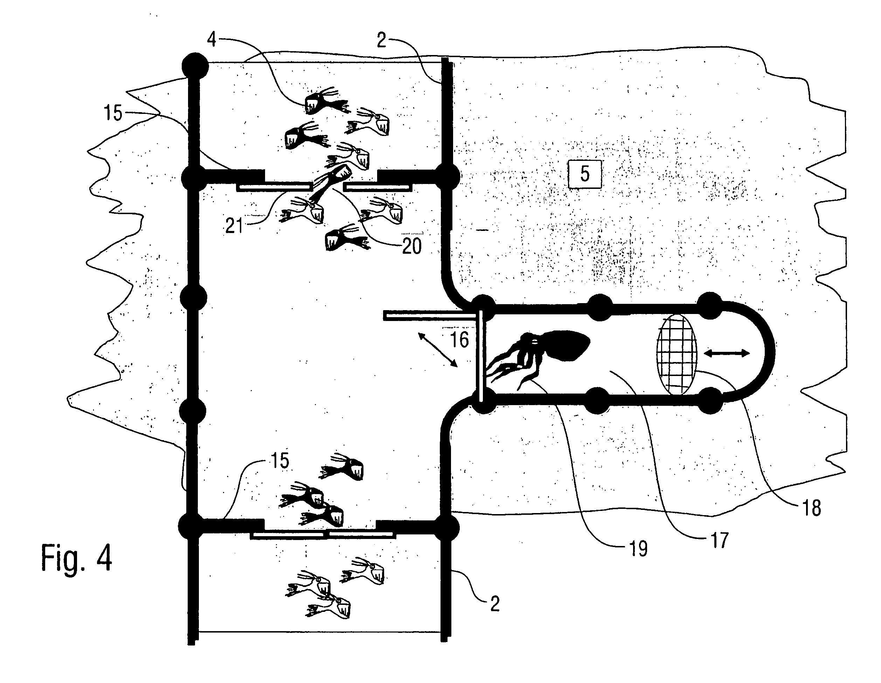

Das Ausführungsbeispiel gemäß Figur 4 stimmt ebenfalls weitgehend mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass sich die Barrieren 15 in dem Wasserbehälter 2 über den gesamten Querschnitt des Wasserbehälters 2 erstrecken und den Wasserbehälter deshalb in mehrere übereinander angeordnete Tiefenzonen aufteilen. In den einzelnen Barrieren 15 befindet sich hierbei eine Durchtrittsöffnung 20, die durch Schieber 21 wahlweise geöffnet oder geschlossen werden kann, wobei die Größe der Durchtrittsöffnung 20 durch die Schieber 21 stufenlos eingestellt werden kann, um nur Meerestiere bis zu einer bestimmten, frei wählbaren Größe durch zu lassen.

Weiterhin ist die Barriere 16 an der Abzweigungsstelle des Seitenstollens 17 hierbei als Klappverschluss ausgebildet, so dass der Seitenstollen 17 wahlweise geöffnet oder verschlossen werden kann.

Ferner sind die Schieber 21 und die Barriere 16 in diesem Ausführungsbeispiel aus einem durchsichtigen Material hergestellt, um eine Sichtkontrolle zu ermöglichen.

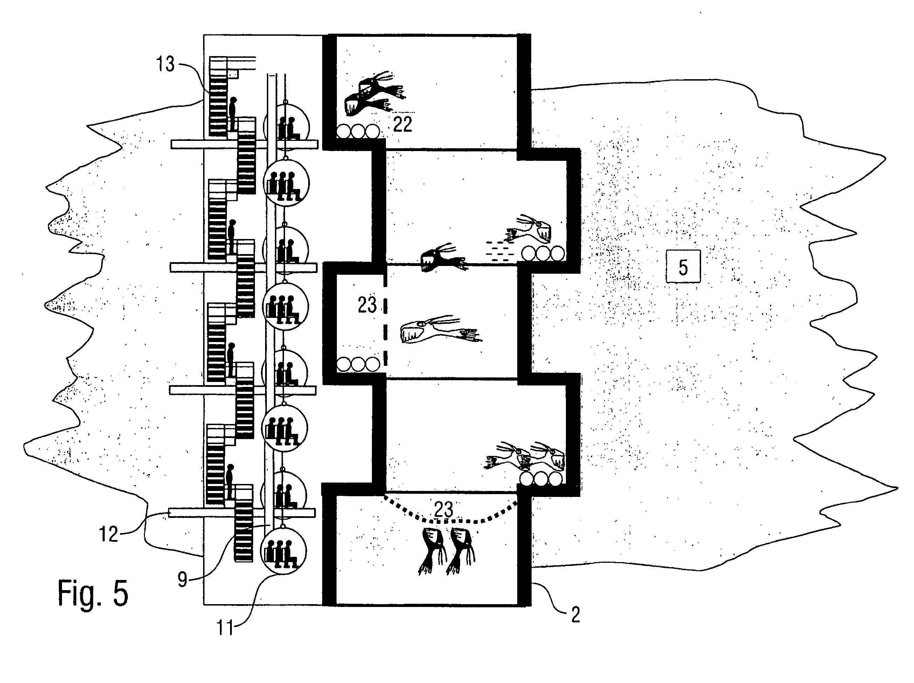

Das Ausführungsbeispiel gemäß Figur 5 stimmt ebenfalls weitgehend mit den vorstehend beschriebenen Ausführungsbeispielen überein, so dass zur Vermeidung von Wiederholungen auf die vorstehende Beschreibung verwiesen wird, wobei für entsprechende Einzelheit dieselben Bezugszeichen verwendet werden.

Eine Besonderheit dieses Ausführungsbeispiels besteht darin, dass der Wasserbehälter 2 in mehrere übereinander angeordnete kreisförmige Elemente aufgeteilt ist, die seitlich zueinander versetzt sind, so dass sich in dem Wasserbehälter 2 jeweils horizontale Plattformen 22 bilden, die von Meeresorganismen besiedelt werden können, die an die jeweilige Tiefe adaptiert sind.

Darüber hinaus können hierbei einzelne Nischen in dem Wasserbehälter 2 durch Gitter 23 abgetrennt werden, um die in den Nischen angesiedelten Meeresorganismen vor Fressfeinden zu schützen.

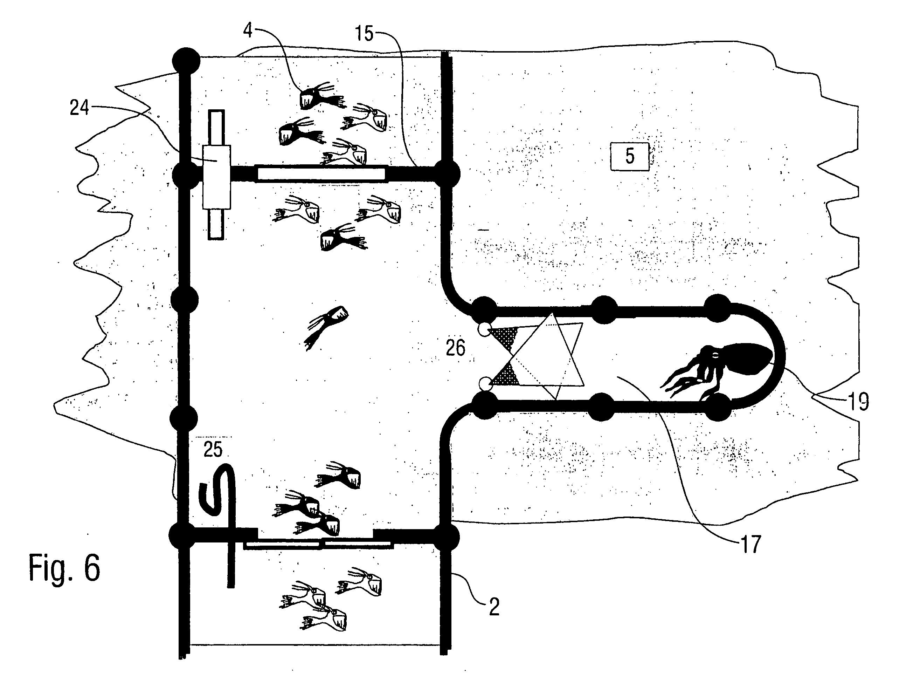

Das Ausführungsbeispiel gemäß Figur 6 stimmt weitgehend mit dem Ausführungsbeispiel gemäß Figur 4 überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Barrieren 15 jeweils eine Durchführung 24, 25 aufweist, die von Wasser durchströmt werden kann, aber die Meerestiere 4 zurückhält. Die Durchführungen 24, 25 können Rohre, Kammern und Labyrinthe enthalten, die es einerseits bestimmten Organismen erlauben, sich anzusiedeln, andererseits aber eine Vertikalmigration von Organismen behindern, ohne diese vollständig zu unterbinden. Um die Sedimentation von Nährstoffen, wie beispielsweise Futter, zu ermöglichen, kann auf die Durchführung 24, 25 noch ein Fangtrichter aufgesetzt werden.

Darüber hinaus sind an der Verzweigungsstelle des Seitenstollens 17 hierbei Infrarotsensoren 26 angeordnet, um eine Annäherung der Meerestiere 19 detektieren zu können.

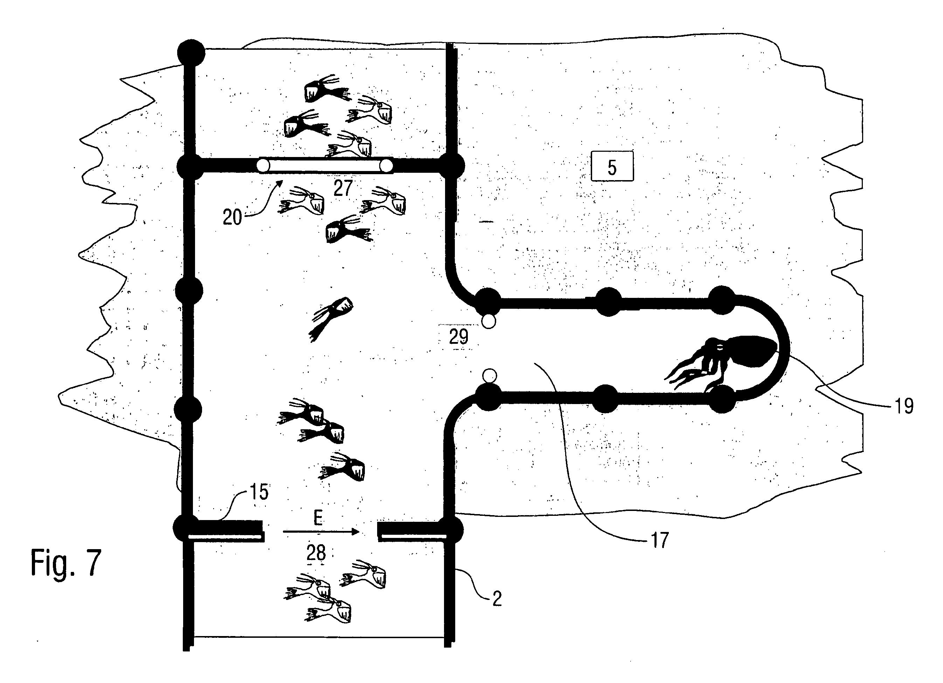

Das Ausführungsbeispiel gemäß Figur 7 stimmt weitgehend mit dem vorstehend beschriebenen Ausführungsbeispiel gemäß Figur 4 überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass in der Durchtrittsöffnung 20 der Barriere 15 Lampen 27 angeordnet sind, die dunkeladaptierte Tiefseeorganismen vor einem Passieren der Durchtrittsöffnung 20 abschrecken.

In der unteren Barriere 15 ist weiterhin eine Elektrodenanordnung 28 angeordnet, die starke elektrische Impulse oder Wechselfelder abgibt und dadurch ebenfalls die Meerestiere 4 am Passieren der Barriere 15 hindert.

Auch an dem Verzweigungspunkt zu dem Seitenstollen 17 sind in diesem Ausführungsbeispiel starke Lampen 29 angeordnet, welche die in dem Seitenstollen 17 befindlichen dunkeladaptierten Meerestiere 19 davon abschrecken, aus dem Seitenstollen 17 in den Wasserbehälter 2 zu schwimmen.

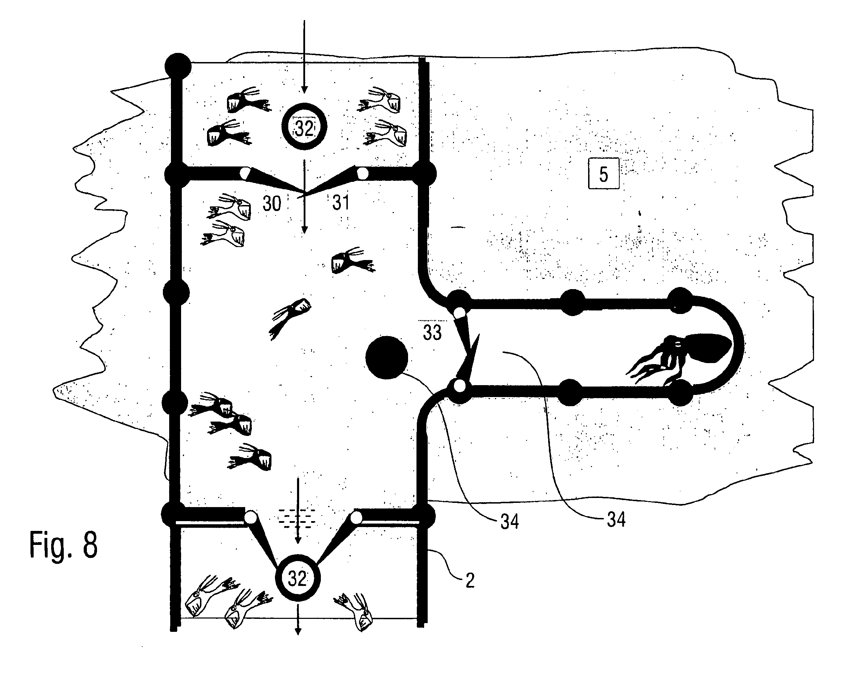

Schließlich stimmt auch das Ausführungsbeispiel gemäß Figur 8 weitgehend mit den vorstehend beschriebenen Ausführungsbeispielen überein, so dass zur Vermeidung von Wiederholungen auf die vorstehende Beschreibung verwiesen wird.

Eine Besonderheit dieses Ausführungsbeispiels besteht darin, dass die Barrieren 15 in dem Wasserbehälter 2 jeweils Verschlussklappen 30, 31 aufweisen, die nach unten aufklappen können, um Versorgungskapseln 32 durchzulassen, die dann bis auf den Boden des Wasserbehälters 2 absinken können. Die Verschlussklappen 30, 31 haben hierbei eine Widerstandskraft, die beim Auftreffen einer der Versorgungskapseln 32 nachgibt, wohingegen die Widerstandskraft ausreicht, um ein Passieren der Meerestiere 4 zu verhindern.

Auch an der Mündungsstelle des Seitenstollens 17 sind hierbei entsprechende Verschlussklappen 33 angeordnet, die nur von einer Versorgungskapsel 34 durchstoßen werden können.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Bergwerksschacht
- 2: Wasserbehälter
- 3: Meerwasser
- 4: Meerestiere
- 5: Erdreich
- 6: Stahlträger
- 7: Stahlträger
- 8, 9: Führungsschienen
- 10, 11: Aufzugsgondeln
- 12: Rettungsplattformen
- 13: Treppen
- 14: Medienleitungen
- 15: Feste Barrieren
- 16: Klappbare Barrieren
- 17: Seitenstollen
- 18: Barriere
- 19: Meerestiere
- 20: Durchtrittsöffnung
- 21: Schieber
- 22: Plattformen
- 23: Gitter
- 24, 25: Durchführung
- 26: Infrarotsensoren
- 27: Lampen
- 28: Elektroden
- 29: Lampen
- 30, 31: Verschlussklappen
- 32: Versorgungskapseln
- 33: Verschlussklappen
- 34: Versorgungskapsel

## Patentansprüche

1. Aquarium mit einem Wasserbehälter (2), der im Betrieb mit Wasser (3) gefüllt ist und Untersuchungsobjekte (4, 19) enthält, insbesondere biologische Organismen, wobei sich der Wasserbehälter (2) mindestens teilweise unterirdisch im Erdreich (5) befindet und sich so tief in das Erdreich (5) erstreckt, dass zumindest am Boden des Wasserbehälters (2) Tiefseedruck herrscht,
**dadurch gekennzeichnet, dass** der Wasserbehälter (2) im Erdreich (5) in einem unterirdischen Hohlraum angeordnet ist oder durch einen unterirdischen Hohlraum gebildet wird, wobei der Hohlraum
a) ein Bergwerksschacht (1),
b) ein Bergwerksstollen (17),
c) eine Bergwerkskaverne oder
d) ein Brunnenschacht ist.

2. Aquarium nach Anspruch 1, **gekennzeichnet durch** eine Kontrolleinrichtung (15, 16, 18, 23, 26, 28, 29, 30, 31, 33), die Bewegungen der Untersuchungsobjekte (4, 19) und/oder des Wassers (3) in dem Wasserbehälter (2) kontrolliert.

3. Aquarium nach Anspruch 2, **dadurch gekennzeichnet, dass** die Kontrolleinrichtung (15, 16, 18, 23, 26, 28, 29, 30, 31, 33) Bewegungen in dem Wasserbehälter (2)
a) verhindert,
b) erfasst und/oder
c) steuert.

4. Aquarium nach einem der Ansprüche 2 bis 3, **dadurch gekennzeichnet, dass** die Kontrolleinrichtung (15, 16, 18, 23, 26, 28, 29, 30, 31, 33) mindestens eine Barriere (15, 16) aufweist, die in dem Wasserbehälter (2) angeordnet ist und eine Bewegung von Objekten (4, 19) in dem Wasserbehälter (2) mindestens teilweise aufhält.

5. Aquarium nach Anspruch 4, **dadurch gekennzeichnet, dass** die Barriere (15, 16, 18) größenselektiv ist, indem die Barriere kleine Objekte durchlässt und große Objekte aufhält.

6. Aquarium nach Anspruch 5, **dadurch gekennzeichnet, dass** die Barriere (15, 16, 18) mindestens ein Gitter mit einer bestimmten Maschenweite aufweist, wobei die Maschenweite des Gitters die Größenselektivität der Barriere bestimmt.

7. Aquarium nach Anspruch 6, **dadurch gekennzeichnet, dass** die Maschenweite des Gitters einstellbar ist.

8. Aquarium nach Anspruch 7, **dadurch gekennzeichnet, dass** die Barriere (15, 16, 18) mehrere planparallel angeordnete Gitter aufweist, die relativ zueinander beweglich sind, um die effektive Maschenweite zu verändern.

9. Aquarium nach einem der Ansprüche 4 bis 8, **dadurch gekennzeichnet, dass** die Barriere (15) eine Durchtrittsöffnung (20) aufweist, in deren Bereich eine Abschreckeinrichtung (27, 28) angeordnet ist, um biologische Organismen vor einem Passieren der Durchtrittsöffnung (20) abzuschrecken.

10. Aquarium nach Anspruch 9, **dadurch gekennzeichnet, dass** die Abschreckeinrichtung (27, 28)
a) Licht,
b) elektrische Impulse,
c) elektrische Wechselfelder und/oder
d) elektromagnetische Strahlung abgibt.

11. Aquarium nach einem der Ansprüche 4 bis 10, **dadurch gekennzeichnet, dass** die Barriere (15, 30, 31) eine bestimmte Widerstandskraft aufweist, so dass die Barriere (15, 30, 31) Objekte (4) mit einer kleiner Durchstoßkraft aufhält, wohingegen die Barriere (15, 30, 31) Objekte (32, 34) mit einer großen Durchstoßkraft durchlässt.

12. Aquarium nach einem der Ansprüche 4 bis 11, **dadurch gekennzeichnet, dass** die Barriere (15) zwischen einer Blockierstellung und einer Passierstellung verstellbar ist, wobei die Barriere (15) in der Blockierstellung die Bewegung der Objekte (4) blockiert, wohingegen die Barriere (15) in der Passierstellung die Objekte (4) passieren lässt.

13. Aquarium nach Anspruch 12, **dadurch gekennzeichnet, dass** die Barriere (5) zwischen der Blockierstellung und der Passierstellung
a) klappbar,
b) drehbar,
c) verschiebbar oder
d) schwenkbar ist.

14. Aquarium nach einem der Ansprüche 4 bis 13, **dadurch gekennzeichnet, dass** die Barriere (15, 16) zumindest in der Blockierstellung den Querschnitt der Wasserbehälters (2)
a) teilweise oder
b) vollständig erfasst.

15. Aquarium nach einem der Ansprüche 4 bis 14, **dadurch gekennzeichnet, dass** die Barriere (15, 16) semipermeabel ist, indem die Barriere für das Wasser (3) und gelöste oder suspendierte Inhaltsstoffe durchlässig ist, wohingegen die Barriere für die Untersuchungsobjekte (4, 19) undurchlässig ist.

16. Aquarium nach einem der Ansprüche 4 bis 15, **dadurch gekennzeichnet, dass** die Barriere (18) eine veränderbare Position aufweist, um eine flexible Raumaufteilung in dem Wasserbehälter (2) zu ermöglichen.

17. Aquarium nach Anspruch 16, **dadurch gekennzeichnet, dass** die Barriere (18) in dem Wasserbehälter (2) verschiebbar ist.

18. Aquarium nach einem der Ansprüche 4 bis 17, **dadurch gekennzeichnet, dass** die Barriere (15, 16, 18) ein Sichtfenster aufweist oder aus einem durchsichtigen Material besteht, um eine Sichtkontrolle zu ermöglichen.

19. Aquarium nach einem der Ansprüche 4 bis 18, **dadurch gekennzeichnet, dass** die Barriere durch Absätze in der inneren Seitenwand des Wasserbehälters (2) gebildet wird, wobei die Absätze Plattformen (22) zur Besiedelung mit Organismen bilden.

20. Aquarium nach einem der Ansprüche 4 bis 19, **dadurch gekennzeichnet, dass** die Barriere durch eine Plattform gebildet wird, die in dem Wasser (3) schwebt.

21. Aquarium nach einem der Ansprüche 2 bis 20, **dadurch gekennzeichnet, dass** die Kontrolleinrichtung mindestens einen Bewegungssensor (26) aufweist, der Bewegungen in dem Wasserbehälter (2) erfasst.

22. Aquarium nach einem der Ansprüche 2 bis 21, **dadurch gekennzeichnet, dass** die Kontrolleinrichtung Bewegungen in senkrechter Richtung und/oder in waagerechter Richtung kontrolliert.

23. Aquarium nach einem der vorhergehenden Ansprüche, **dadurch gekennzeichnet, dass** der unterirdische Hohlraum
a) ein natürlicher geologischer Hohlraum oder
b) ein künstlich erzeugter Hohlraum im Erdreich (5) ist.

24. Aquarium nach einem der vorhergehenden Ansprüche, **dadurch gekennzeichnet, dass** der Wasserbehälter (2) im gefüllten Zustand eine senkrechte Wassersäule mit einer Höhe von mehr als 20m, 50m, 100m, 250m, 500m oder 1000m enthält.

25. Aquarium nach einem der vorhergehenden Ansprüche, **dadurch gekennzeichnet, dass** der Wasserbehälter (2) mit
a) Salzwasser (3) oder
b) Süßwasser gefüllt ist.

26. Betriebsverfahren für ein Aquarium mit den folgenden Schritten:
a) Befüllen eines Wasserbehälters (2) mit Wasser (3), wobei sich der Wasserbehälter (2) mindestens teilweise unterirdisch im Erdreich (5) befindet und sich so tief in das Erdreich (5) erstreckt, dass zumindest am Boden des Wasserbehälters (2) Tiefseedruck herrscht,
b) Einsetzen von Untersuchungsobjekten in den Wasserbehälter (2),
**dadurch gekennzeichnet, dass**
der Wasserbehälter (2) im Erdreich (5) in einem unterirdischen Hohlraum angeordnet ist oder durch einen unterirdischen Hohlraum gebildet wird, wobei der Hohlraum
- ein Bergwerksschacht (1),
- ein Bergwerksstollen (17),
- eine Bergwerkskaverne oder
- ein Brunnenschacht ist.

27. Betriebsverfahren nach Anspruch 26,
**gekennzeichnet durch** folgenden Schritt:
Kontrolle von Bewegungen der Untersuchungsobjekte (4, 19) und/oder des Wassers (3) in dem Wasserbehälter (2).

28. Betriebsverfahren nach Anspruch 27, **dadurch gekennzeichnet, dass** im Rahmen der Kontrolle Bewegungen in dem Wasserbehälter (2)
a) verhindert,
b) erfasst und/oder
c) gesteuert werden.

29. Betriebsverfahren nach einem der Ansprüche 27 oder 28, **dadurch gekennzeichnet, dass** die Bewegung der Objekte (4, 19) in Abhängigkeit von Objekteigenschaften kontrolliert wird.

30. Betriebsverfahren nach Anspruch 29, **dadurch gekennzeichnet, dass** die Kontrolle in Abhängigkeit folgender Objekteigenschaften erfolgt:
a) Objektmasse,
b) Objektgröße,
c) Objekttyp.

31. Betriebsverfahren nach einem der Ansprüche 26 bis 30, **gekennzeichnet durch** folgenden Schritt:
Verstellung mindestens einer Barriere in dem Wasserbehälter (2), um Bewegungen wahlweise aufzuhalten oder durchzulassen.

32. Betriebsverfahren nach Anspruch 31, **dadurch gekennzeichnet, dass** die Barriere eine Gitteranordnung mit einer verstellbaren Maschenweite aufweist, wobei die Maschenweite eingestellt wird, um Bewegungen wahlweise aufzuhalten oder durchzulassen.

33. Betriebsverfahren nach einem der Ansprüche 26 bis 32, **dadurch gekennzeichnet, dass** der Wasserbehälter (2) eine Barriere (15) mit einer Durchtrittsöffnung (20) aufweist, wobei biologische Organismen vor einem passieren der Durchtrittsöffnung abgeschreckt werden.

34. Betriebsverfahren nach Anspruch 33, **dadurch gekennzeichnet, dass** zum Abschrecken der Organismen
a) Licht,
b) elektrische Impulse,
c) elektrische Wechselfelder und/oder
d) elektromagnetische Strahlung abgegeben werden.

35. Verwendung eines Hohlraums in einem Untertage-Bergwerk als Wasserbehälter (2) für ein Aquarium.

## Claims

1. Aquarium comprising a water container (2) which is filled with water (3) when in use and contains objects of investigation (4, 19), particularly biological organisms, wherein the water container (2) is at least partially located submontane in the ground (5) and extends so deeply into the ground (5) that there is deep sea pressure at least at the bottom of the water container (2),
**characterized in that** the water container (2) is arranged in the ground (5) in a submontane cavity or formed by a submontane cavity, wherein the cavity is
a) a mine pit (1),
b) a mine gallery (17),
c) a mine cavern or
d) a well shaft.

2. Aquarium according to claim 1, **characterized by** a control device (15, 16, 18, 23, 26, 28, 29, 30, 31, 33) controlling movements of the objects of investigation (4, 19) and/or the water (3) in the water container (2).

3. Aquarium according to claim 2, **characterized in that** the control device (15, 16, 18, 23, 26, 28, 29, 30, 31, 33)
a) avoids,
b) detects and/or
c) controls
movements in the water container (2).

4. Aquarium according to one of claims 2 to 3, **characterized in that** the control device (15, 16, 18, 23, 26, 28, 29, 30, 31, 33) comprises at least one barrier (15, 16) which is arranged in the water container (2) and holds a movement of objects (4, 19) in the water container (2) at least partially.

5. Aquarium according to claim 4, **characterized in that** the barrier (15, 16, 18) is selective with regard to size **in that** it lets small objects pass and holds big objects.

6. Aquarium according to claim 5, **characterized in that** the barrier (15, 16, 18) comprises at least one grid having a certain mesh size wherein the mesh size of the grid determines the selectivity of the barrier with regard to the size.

7. Aquarium according to claim 6, **characterized in that** the mesh size of the grid is adjustable.

8. Aquarium according to claim 7, **characterized in that** the barrier (15, 16, 18) comprises several plane-parallely arranged grids which are moveable relative to each other in order to change the effective mesh size.

9. Aquarium according to one of claims 4 to 8, **characterized in that** the barrier (15) comprises a passage opening (20) in the region of which an alienating device (27, 28) is arranged for alienating biological organisms from passing the passage opening (20).

10. Aquarium according to claim 9, **characterized in that** the alienating device (27, 28) emits
a) light,
b) electrical pulses,
c) electric alternating fields and/or
d) electromagnetic radiation.

11. Aquarium according to any of claims 4 to 10, **characterized in that** the barrier (15, 30, 31) comprises a certain resistance force so that the barrier (15, 30, 31) holds objects (4) with a smaller force of penetration, whereas the barrier (15, 30, 31) lets objects pass having a greater force of penetration.

12. Aquarium according to any of claims 4 to 11, **characterized in that** the barrier (15) is adjustable between a blocking position and a passing position, wherein the barrier (15) blocks the movement of the objects (4) in the blocking position, wherein the barrier (15) lets the objects (4) pass in the passing position.

13. Aquarium according to claim 12, **characterized in that** the barrier (5) is
a) foldable,
b) rotatable,
c) slidable or
d) pivotable
between the blocking position and the passing position.

14. Aquarium according to any of claims 4 to 13, **characterized in that** the barrier (15, 16) in the blocking position covers the cross section of the water container (2)
a) partially or
b) completely.

15. Aquarium according to any of claims 4 to 14, **characterized in that** the barrier (15, 16) is semi-permeable **in that** the barrier is permeable for the water (3) and any substances dissolved or suspended therein, while the barrier is impermeable for the objects of investigation (4, 19).

16. Aquarium according to any of claims 4 to 15, **characterized in that** the barrier (18) comprises a changeable position for enabling a flexible division into compartments in the water container (2).

17. Aquarium according to claim 16, **characterized in that** the barrier (18) is slidable in the water container (2).

18. Aquarium according to any of claims 4 to 14, **characterized in that** the barrier (15, 16, 18) comprises an inspection window or consists of transparent material for allowing a visual inspection.

19. Aquarium according to any of claims 4 to 18, **characterized in that** the barrier is formed by terraces in the inner side wall of the water container (2), wherein the terraces are forming platforms (22) for colonization by organisms.

20. Aquarium according to any of claims 4 to 19, **characterized in that** the barrier is formed by a platform floating in the water (3).

21. Aquarium according to any of claims 2 to 20 , **characterized in that** the control device comprises at least one motion sensor (26) detecting movements in the water container (2).

22. Aquarium according to any of claims 2 to 21, **characterized in that** the control device controls movements in a vertical direction and/or in a horizontal direction.

23. Aquarium according to any of the preceding claims, **characterized in that** the submontane cavity is
a) a natural geological cavity or
b) an artificially generated cavity in the ground (5).

24. Aquarium according to any of the preceding claims, **characterized in that** the water container (2) contains a vertical water column with a height of more than 20m, 50m, 100m, 250m, 500m or 1000m in the filled condition.

25. Aquarium according to any of the preceding claims, **characterized in that** the water container (2) is filled with
a) salt water (3) or
b) fresh water.

26. Method of operation for an aquarium comprising the following steps:
a) Filling a water container (2) with water (3) wherein the water container (2) is arranged at least partially submontane in the ground (5) and extends so deeply into the ground (5) that there is deep sea pressure at least at the bottom of the water container (2),
b) inserting of objects of investigation into the water container (2),
**characterized in that**
the water container (2) is arranged in a submontane cavity within the ground (5) or formed by a submontane cavity, wherein the cavity is
- a mine pit (1),
- a mine gallery (17),
- a mine cavern or
- a well shaft.

27. Method of operation according to claim 26, comprising the following step:
controlling movements of the objects of investigation (4, 19) and/or the water (3) in the water container (2).

28. Method of operation according to claim 27, **characterized in that** the movements in the water container (2) are
a) avoided,
b) detected and/or
c) controlled
in the framework of the controlling.

29. Method of operation according to any of claims 27 or 28, **characterized in that** the movement of the objects (4, 19) is controlled depending on the object properties.

30. Method of operation according to claim 29, **characterized in that** the control is made in dependence of the following object properties:
a) object mass,
b) object size,
c) object type.

31. Method of operation according to any of claims 26 to 30, **comprising** the following step:
adjusting at least one barrier in the water container (2) for alternatively holding movements or letting movements pass.

32. Method of operation according to claim 31, **characterized in that** the barrier comprises a grid arrangement with an adjustable mesh size, wherein the mesh size is adjusted for alternatively holding movements or letting movements pass.

33. Method of operation according to any of claims 26 to 32, **characterized in that** the water container (2) comprises a barrier (15) with a passage opening (20), wherein biological organisms are alienated from passing through the passage opening.

34. Method of operation according to claim 33, **characterized in that**
a) light,
b) electrical pulses,
c) electric alternating fields and/or
d) electromagnetic radiation is emitted
for alienating the organisms.

35. Use of a cavity in an underground mine as a water container (2) for an aquarium.

## Revendications

1. Aquarium avec un réservoir d'eau (2) rempli d'eau (3) quand il est en service et contenant des objets à examiner (4, 19), en particulier des organismes biologiques, le réservoir d'eau (2) se trouvant au moins en partie enterré dans le sol (5) et s'étendant jusqu'à une profondeur de sol (5) telle qu'une pression d'étage abyssal règne au moins au fond du réservoir d'eau (2),
**caractérisé en ce que** le réservoir d'eau (2) est disposé dans une cavité souterraine du sol (5) ou est formé par une cavité souterraine, ladite cavité étant
a) un puits de mine (1),
b) une galerie de mine (17),
c) une caverne de mine, ou
d) un puits à eau.

2. Aquarium selon la revendication 1, **caractérisé par** un dispositif de contrôle (15, 16, 18, 23, 26, 28, 29, 30, 31, 33) qui surveille les mouvements des objets à examiner (4, 19) et/ou de l'eau dans le réservoir d'eau (2).

3. Aquarium selon la revendication 2, **caractérisé en ce que** le dispositif de contrôle (15, 16, 18, 23, 26, 28, 29, 30, 31, 33)
a) empêche,
b) saisit et/ou
c) commande
les mouvements dans le réservoir d'eau (2).

4. Aquarium selon l'une des revendications 2 et 3, **caractérisé en ce que** le dispositif de contrôle (15, 16, 18, 23, 26, 28, 29, 30, 31, 33) comporte au moins une barrière (15, 16) disposée dans le réservoir d'eau (2) et retenant au moins partiellement un déplacement des objets (4, 19) dans le réservoir d'eau (2).

5. Aquarium selon la revendication 4, **caractérisé en ce que** la barrière (15, 16, 18) est sélective suivant la grandeur, en laissant passer les petits objets et en retenant les grands objets.

6. Aquarium selon la revendication 5, **caractérisé en ce que** la barrière (15, 16, 18) comporte au moins une grille avec une ouverture de maille définie, ladite ouverture de maille de la grille déterminant la sélectivité de grandeur de la barrière.

7. Aquarium selon la revendication 6, **caractérisé en ce que** l'ouverture de maille de la grille est réglable.

8. Aquarium selon la revendication 7, **caractérisé en ce que** la barrière (15, 16, 18) comporte plusieurs grilles disposées sur des plans parallèles, relativement mobiles entre elles, pour varier l'ouverture de maille effective.

9. Aquarium selon l'une des revendications 4 à 8, **caractérisé en ce que** la barrière (15) comporte une ouverture de passage (20) au niveau de laquelle est prévu un dispositif d'intimidation (27, 28) pour dissuader des organismes biologiques de traverser l'ouverture de passage (20).

10. Aquarium selon la revendication 9, **caractérisé en ce que** le dispositif d'intimidation (27, 28) diffuse
a) de la lumière,
b) des impulsions électriques,
c) des champs électriques alternatifs et/ou
d) un rayonnement électromagnétique.

11. Aquarium selon l'une des revendications 4 à 10, **caractérisé en ce que** la barrière (15, 30, 31) présente une force de résistance définie, telle que la barrière (15, 30, 31) retient des objets (4) ayant une force de traversée réduite, alors qu'elle laisse passer des objets (32, 34) ayant une force de traversée élevée.

12. Aquarium selon l'une des revendications 4 à 11, **caractérisé en ce que** la barrière (15) est réglable entre une position de blocage et une position de traversée, ladite barrière (15) stoppant le déplacement des objets (4) en position de blocage, alors qu'elle laisse passer les objets (4) en position de traversée.

13. Aquarium selon la revendication 12, **caractérisé en ce que** la barrière (15) est
a) rabattable,
b) rotative,
c) coulissante ou
d) pivotante
entre la position de blocage et la position de traversée.

14. Aquarium selon l'une des revendications 4 à 13, **caractérisé en ce que** la barrière (15, 16) couvre
a) en partie ou
b) en totalité
la section transversale du réservoir d'eau (2), au moins en position de blocage.

15. Aquarium selon l'une des revendications 4 à 14, **caractérisé en ce que** la barrière (15, 16) est semi-perméable, ladite barrière étant perméable à l'eau (3) et à des composants dissous ou en suspension, alors qu'elle est imperméable aux objets à examiner (4, 19).

16. Aquarium selon l'une des revendications 4 à 15, **caractérisé en ce que** la barrière (18) a une position modifiable pour permettre une division flexible de l'espace dans le réservoir d'eau (2).

17. Aquarium selon la revendication 16, **caractérisé en ce que** la barrière (18) peut coulisser dans le réservoir d'eau (2).

18. Aquarium selon l'une des revendications 4 à 17, **caractérisé en ce que** la barrière (15, 16, 18) comporte une fenêtre d'observation ou est en matériau transparent pour permettre un contrôle visuel.

19. Aquarium selon l'une des revendications 4 à 18, **caractérisé en ce que** la barrière est formée par des gradins sur la paroi latérale intérieure du réservoir d'eau (2), lesdits gradins formant des plates-formes (22) destinées à être colonisées par des organismes.

20. Aquarium selon l'une des revendications 4 à 19, **caractérisé en ce que** la barrière est formée par une plateforme en suspension dans l'eau (3).

21. Aquarium selon l'une des revendications 2 à 20, **caractérisé en ce que** le dispositif de contrôle comporte au moins un capteur de mouvement (26) qui saisit les mouvements dans le réservoir d'eau (2).

22. Aquarium selon l'une des revendications 2 à 21, **caractérisé en ce que** le dispositif de contrôle surveille les mouvements en direction verticale et/ou en direction horizontale.

23. Aquarium selon l'une des revendications précédentes, **caractérisé en ce que** la cavité souterraine est
a) une cavité géologique naturelle ou
b) une cavité artificiellement réalisée dans le sol (5).

24. Aquarium selon l'une des revendications précédentes, **caractérisé en ce que** le réservoir d'eau (2) contient en état de remplissage une colonne d'eau verticale d'une hauteur supérieure à 20 m, 50 m, 100 m, 250 m, 500 m ou 1000 m.

25. Aquarium selon l'une des revendications précédentes, **caractérisé en ce que** le réservoir d'eau (2) est rempli
a) d'eau salée (3) ou
b) d'eau douce.

26. Procédé de fonctionnement pour un aquarium, comprenant les étapes suivantes :
a) remplissage d'un réservoir d'eau (2) avec de l'eau (3), ledit réservoir d'eau (2) se trouvant au moins en partie enterré dans le sol (5) et s'étendant jusqu'à une profondeur de sol (5) telle qu'une pression d'étage abyssal règne au moins au fond du réservoir d'eau (2),
b) déversement d'objets à examiner dans le réservoir d'eau (2)
**caractérisé en ce que**
le réservoir d'eau (2) est disposé dans une cavité souterraine du sol (5) ou est formé par une cavité souterraine, ladite cavité étant
- un puits de mine (1),
- une galerie de mine (17),
- une caverne de mine, ou
- un puits à eau.

27. Procédé de fonctionnement selon la revendication 26, **caractérisé par** l'étape suivante :
surveillance des mouvements des objets à examiner (4, 19) et/ou de l'eau dans le réservoir d'eau (2).

28. Procédé de fonctionnement selon la revendication 27, **caractérisé en ce que**, dans le cadre du contrôle, les mouvements sont
a) empêchés,
b) saisis et/ou
c) commandés
dans le réservoir d'eau (2).

29. Procédé de fonctionnement selon l'une des revendications 27 et 28, **caractérisé en ce que** le mouvement des objets (4, 19) est surveillé en fonction de caractéristiques des objets.

30. Procédé de fonctionnement selon la revendication 29, **caractérisé en ce que** la surveillance est effectuée en fonction des caractéristiques d'objet suivantes :
a) masse d'objet,
b) grandeur d'objet,
c) type d'objet.

31. Procédé de fonctionnement selon l'une des revendications 26 à 30, **caractérisé par** l'étape suivante :
réglage d'au moins une barrière dans le réservoir d'eau (2) pour retenir ou admettre sélectivement les déplacements.

32. Procédé de fonctionnement selon la revendication 31, **caractérisé en ce que** la barrière est un agencement de grille avec une ouverture de maille définie, ladite ouverture de maille étant réglée pour retenir ou admettre sélectivement les déplacements.

33. Procédé de fonctionnement selon l'une des revendications 26 à 32, **caractérisé en ce que** le réservoir d'eau (2) comporte une barrière (15) avec une ouverture de passage (20), des organismes biologiques étant dissuadés de traverser l'ouverture de passage.

34. Procédé de fonctionnement selon la revendication 33, **caractérisé en ce que**
a) de la lumière,
b) des impulsions électriques,
c) des champs électriques alternatifs et/ou
d) un rayonnement électromagnétique
sont diffusés pour intimider les organismes.

35. Utilisation d'une cavité dans une mine souterraine en tant que réservoir d'eau (2) pour un aquarium.
